# EUROPEAN PATENT SPECIFICATION

(11) **EP 0 520 990 B1**
(45) Date of publication and mention of the grant of the patent: **29.01.1997**
(21) Application number: 90916008.7
(22) Date of filing: 02.11.1990
(51) Int. Cl.: H01M 10/28, H01M 10/40, H01M 4/62, H01M 4/50

(54) **MANGANESE DIOXIDE CATHODE FOR A RECHARGEABLE CELL, AND CELL CONTAINING THE SAME**
MANGANDIOXIDKATHODE FÜR EINE AUFLADBARE ZELLE UND KATHODE ENTHALTENDE ZELLE
CATHODE EN BIOXYDE DE MANGANESE POUR PILES RECHARGEABLES ET PILES CONTENANT CETTE CATHODE

(30) Priority: 15.02.1990 CA 10142
(43) Date of publication of application: 07.01.1993
(73) Proprietor: BATTERY TECHNOLOGIES INC., Mississauga Ontario L5L 1J9 (CA)
(72) Inventor: TOMANTSCHGER, Klaus, Mississauga, Ontario L5N 2E8 (CA); MICHALOWSKI, Christopher, Mississauga, Ontario L5L 7E7 (CA)
(74) Representative: Rackham, Anthony Charles
(86) International application number: CA9000379
(87) International publication number: WO9112635

(56) References cited:
- EP-A- 0 265 950
- WO-A-90/02423
- CH-A- 669 479
- FR-A- 1 211 775
- FR-A- 1 572 618
- FR-A- 2 011 932
- US-A- 4 011 103
- US-A- 4 091 178
- Database WPI, no. 75-74733w, Derwent Publications Ltd (London, GB) & JP, A, 50035634
- Patent Abstracts of Japan, vol. 14, no. 130 (E-901)[4073], 12 March 1990; & JP, A, 1320779
- Patent Abstracts of Japan, vol. 8, no. 70 (E-235)[1507], 3 April 1984; & JP, A, 58220360
- Patent Abstracts of Japan, vol. 5, no. 63 (E-54)[735], 28 April 1981, & JP, A, 5613667
- Patent Abstracts of Japan, vol. 11, no. 359 (E-559)[2806], 21 November 1987; & JP, A, 62133671
- Patent Abstract of Japan, vol. 4, no. 83 (E-015), 14 June 1980; & JP, A, 55049863

## Description

This invention relates to rechargeable alkaline electro chemical cells having manganese dioxide cathodes. Generally, the cells in keeping with the invention, and for which specific examples are given, are alkaline manganese dioxide-zinc cells; however, other cell systems are contemplated which are cells having alkaline electrolytes and manganese dioxide cathodes, and having anodes such as hydrogen, iron, cadmium, or lead. Indeed, the present invention also is relevant to cells having lithium anodes, manganese dioxide cathodes, and a non-aqueous electrolyte.

What the present invention particularly provides is a cell having an unconstrained rechargeable alkaline manganese dioxide cathode. By "unconstrained", it is meant that unlike many prior art patents, there is no additional wire screen or "cage" which is provided to specifically mechanically constrain the cathode from growing due to the tendency of manganese dioxide cathodes to swell during a discharge cycle. The cells in keeping with the present invention may exhibit high drain rate capabilities, as well long cycle life.

It must always be recognized that cells having rechargeable manganese dioxide cathodes, with zinc or other anodes as discussed above and noted hereafter, are assembled in their fully charged state. That is to say, the first cycle to which any such cell is subjected to, in use, is a discharge cycle, after which the cell is required to be recharged for subsequent use. This is, of course, in contradistinction to nickel cadmium (Ni-Cd) cells, which must first be charged before they are capable of being used.

Because any cell in keeping with the present invention -- whether a bobbin cell, or a coin or button cell -- is subjected to discharge when it is first put into use, and because manganese dioxide cathodes (especially in the presence of an alkaline electrolyte) have a tendency to swell during discharge, care must be taken to ensure that the cathode maintains its integrity and does not disintegrate or substantially swell in such a manner as to disturb the internal structure of the cell, thereby rendering it ineffective for further use. That, of course, is what happens or may happen generally if primary alkaline manganese dioxide-zinc cells are subjected to a charge cycle following discharge.

One further problem that develops generally in manganese dioxide cathodes is the possible migration of the zincate from the anode to the cathode. Zincate ions can be transported to the manganese dioxide cathode and there they form a mixed oxide, hetaerolite (ZnO.Mn₂O₃). The hetaerolite irreversibly affects the behaviour of a manganese dioxide cathode. It has been particularly recognized by Kordesch et al in Electrochemica Act a 24 (1981) at 1495 to 1504 that the longevity of a rechargeable alkaline manganese dioxide cathode in its homogenous discharge phase above about MnO_{1.55} was limited by the mechanical failure of the electrode (cathode). It has been well shown that a manganese dioxide cathode expands during discharge and contracts during charge. Kordesch et al have shown that cycling an unconfined manganese dioxide cathode through four discharge-charge cycles resulted in the thickness of the MnO₂ electrode becoming more than double its original thickness, and that the electrode failed due to the bulging and the mechanical disintegration which occurred. This was notwithstanding the fact that a binder (in this case, polysulphone) was employed.

Kordesch et al also demonstrated that if a similar electrode was confined by a perforated disc, the confined electrode continued its cycling life well beyond the fourth cycle; and that the change in dimension between the charged and the discharged electrode was only about half of that which occurred in the unconfined electrode. It was demonstrated that a mounting pressure of about 250-750 N/cm² was required to increase the cycle life from less than about 5 cycles -- shown, above, to be because of poor conductivity and mechanical disintegration -- and to achieve at least a cycle life of 75 cycles. A peak of 92 cycles was found at 500 N/cm². However, it was also found that at higher mounting pressures the cycle life would drop because of the loss of pore volume within the manganese dioxide cathode, thereby creating problems with respect to electrolyte penetration within the cathode.

When the manganese dioxide cathode is present in the form of a sleeve or a disc, additional difficulties may arise. The internal resistance of the electrode may increase, and the mechanical disintegration of the cathode may be particularly severe. Kordesch, in "Batteries, Vol. 1" at pages 201 to 219 discusses these problems.

Several prior art references show attempts to preclude the expansion of a manganese dioxide cathode during discharge and, indeed, to try to prevent its contraction during charge, including such matters as the addition of a binder such as a cement (U.S. Patent 2,962,540); the addition of graphitized textile fibres (U.S. Patent 2,977,401 and equivalent French Patent 1 211 775); the addition of latex binders (U.S. Patent 3,113,050); use of combination binders such as cement and steel wool (U.S. Patent 3,335,031); and the use of supplementing binders as described in U.S. Patent 3,945,847. None of those patents, however, could preclude the mechanical disintegration of the cathode, apparently due to the limited binding strength of the materials being used.

Kordesch and Gsellmann in U.S. Patent 4,384,029 teach cylindrical "bobbin" cells which may use mechanical enclosures such as tubes, springs, mechanical wedges, and perforated cylinders, to preclude expansion of the cathode during discharge of those bobbin cells. What this patent attempts to do is to create a constant volume cathode, which means that the cathode must always be under a certain mounting pressure at all times. That patent suggests that by increasing the mounting pressure, the number of usable cycles for the cell will increase. By providing the metal cage, which is essentially rigid, the tendency of the cathode to swell creates internal pressure within itself, which acts against the metal cage and between the cage and the can, thereby counteracting the tendency to swell; and by maintaining the cathode under pressure, it maintains a substantially constant volume during discharge as well as charge.

If mechanical structures such as cages or screens are employed, then there is a significant increase in the material cost of the cell, as well as a significant increase in the cost of assembly of the cell. Indeed, there may be a significant effect and complication with respect to the use of high speed production equipment. Moreover, the use of a mechanical component such as a perforated iron cage or plate may significantly increase the probability of cell gassing within the cell.

Still further, the use of the mechanical cage or screen adjacent to the separator of the cell may significantly affect the capability of the cell to operate in a high drain condition. Any mechanical means which restricts the electrode interface between the cathode and the anode will act to limit the current density achievable within the cell.

According to the invention there is provided a rechargeable electrochemical cell having a container, internal components comprising an anode, an ion permeable separator, at least one unconstrained manganese dioxide cathode pellet which has no additional wire screen or cage or binder specifically to constrain the cathode mechanically from growing due to the tendency of manganese dioxide cathodes to swell during a discharge cycle, an ion conductive electrolyte, and a closure member, the said closure member being placed over the anode, separator, cathode and electrolyte, within the container, so as to seal the internal components within the container, and the cathode pellet or pellets being restricted from significantly changing its dimensions during charging and discharging cycles by interference at its or their outer periphery and its or their bottom with the container, and otherwise by interference with the separator and/or with the closure member, and having been formed at a pressure of from about 1,000 to about 20,000 N/cm².

Thus, the present invention achieves its purpose of providing an unconstrained cathode by restricting the cathode from significantly changing its dimensions during discharge by, essentially, filling the entire volume within the cell intended for the cathode and thereby leaving essentially no void above the cathode between the top of the cathode and the closure of the cell.

It is possible in addition to admix into the cathode a small quantity of fibres, usually conductive fibres. In yet another approach, the cathode may have additionally admixed thereto a small amount of a metal-based additive which, surprisingly, may be zinc, zinc oxide, or zinc stearate.

Indeed, the present invention has shown that, although there may be changes in the dimensions of the cathode during cycling -- expansion during discharge, contraction during charge, as noted above -- and that while the overall size of the cathode may slowly increase as the number of cycles which the cell has been subjected increases, the present invention does provide a cathode for use in cell which exhibits at least equivalent operating characteristics, or better operating characteristics, than any of the prior art cells which employ hinder materials or mechanical components as noted above.

It is determined that with an unconstrained cyclindrical or sleeve-type cathode in a cyclindrical or bobbin cell, and a disc cathode in a coin or button cell, the cathode structure may be subjected to a variety of forces as the cell is being cycled. Particularly during discharge, the tendency of the cathode to swell is inhibited by the metal can or container within which the cell is assembled. It appears that the tendency for the cathode of a bobbin cell to expand inwardly towards the anode is significantly reduced, which may in part be due to the sleeve geometry and due to the presence of the separator and the cylindrical anode within it. In a coin or button cell, the tendency for the cathode to expand upwardly towards the anode appears likewise to be reduced. What also appears to be the case as that the tendency for the manganese dioxide cathode to swell may be substantially linear in all directions; and since the cathode is significantly longer in length or higher than its thickness or the width of its annulus, the expansion of the cathode during discharge will for the most part be longitudinal -- that is the height of the cathode will increase significantly more than the width or thickness of the annulus, and the amount of that increase is in some way related to although it may he greater than the ratio of the initial condition height and width of the cathode.

However, in keeping with the present invention, there is substantially little void space within the cell can above the cathode and between it and the cell closure member, so that to all intents and purposes the cathode is restricted from significantly changing its dimensions during discharge by interference at its outer periphery, and at its bottom, with the cell can or container; and by interference at its inner periphery with the separator of the cell; and by interference at its top with the closure member for the cell.

The figures which accompany the following discussion are representations of typical cells in keeping with the present invention. In this instance:
Figure 1 shows a typical manganese dioxide-zinc cell of the present invention in the AA size; and
Figure 2 shows a typical construction of a coin or button of the present invention.

First, having regard to the Figures, typical cell structures for a bobbin cell 10 and coin or button cell 40 are shown. For ease of discussion, similar cell components are shown having identical reference numerals. Each cell includes a container or can 12, which may be nickel plated steel or any other convenient can of the sort generally used for the manufacture of primary or secondary cells. Within the can 12 there is an anode 14, a separator 16, and a cathode 18. Typically, the separator may be a single layer of a cellulosic, non-woven material or it may he a dual layer having a separate fibre reinforcement and an ion permeable layer.

In the bobbin cell, there is extending downwardly into the anode 14 a nail or current collector 20, which pierces and extends through the cell closure 22, by which the cell is sealed as by crimping such as at 24. Typically, the nail or current collector is made of brass or bronze.

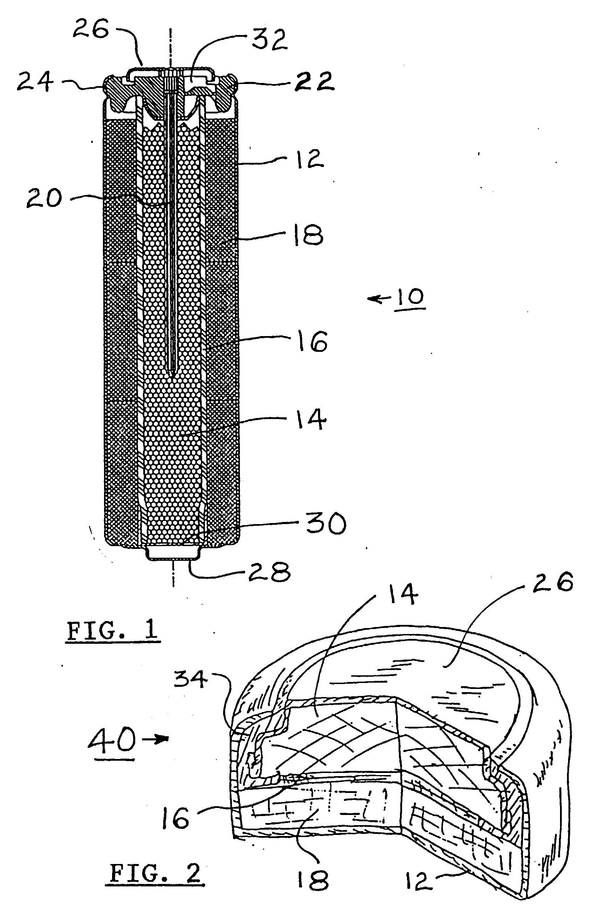

Each cell has a negative cap 26 associated with and in the electrical conductivity with anode 14, either directly or, in the case of the bobbin cell 10, through the nail or current collector 20. In a usual embodiment of a bobbin cell such as that shown in Figure 1, the positive terminal is formed such as by a pip 28 formed in the can 12; an insulative washer or cup 30 is placed below the anode 14; and in the embodiment shown, the separator 16 extends down into the insulative cup 30, which protects the anode from coming into contact with the can 12.

It will also be noted in the embodiment of Figure 1 that the separator 16 extends up to contact and interfere with the bottom surface of the closure member 22. A relief membrane 32 is shown moulded into the closure member 22, and it is intended to burst at a pre-determined pressure in the event of a significant build up of internal gas pressure within the cell.

The coin or button cell 40 uses the can 12 as its positive terminal; and it is crimped over the grommet 34 so as to insulate the positive and negative terminals of the cell from each other.

What the present invention provides, therefore, is a rechargeable electrochemical cell having a container 12, an anode 14, a separator 16, and a manganese dioxide cathode 18. There is an ion conductive electrolyte present within the cell, providing the ion transfer medium for current to flow between the cathode and the anode, and a closure member 22 or grommet 34 which is also a closure member. As noted, all of the internal components are sealed within the container.

As discussed, the usual embodiments of the present invention contemplate the use of aqueous alkaline electrolyte. However, non-aqueous, non-alkaline electrolytes may be used in some circumstances, but within the ambit of and otherwise in keeping with the teachings of the present invention -- for example, lithium cells.

In Keeping with one provision of the present invention, the cathode cf a nobbin cell is restricted from significantly changing its dimensions during discharge by interference at its outer periphery and its bottom with the internal surfaces of the container 12, at its inner periphery by interference with the separator 16, and at its top by interference with the underside of the closure member 22. The cathode of a coin or button cell is likewise restricted by the container 12 and separator 16.

Usually, as noted, the anode may be zinc; but it may in certain circumstances be chosen from any one of the group consisting of zinc, hydrogen, iron, cadmium, and lead,

In general, bobbin cells according to the present invention are cylindrical, having the cathode in the form of an annulus or a series of rings or pellets, and a cylindrical anode axially placed within the cathode. Coin or button cells have both the cathode and anode in the form of a disc or wafer.

It is usual, and will he shown in examples below, that the cathode may have certain additives admixed to its formulation. In general, from about 4% to about 8% by weight of the cathode is the alkaline electrolyte -- generally 6N KOH to 12N KOH.

Still further, in general the cathode will contain a small amount of graphite -- usually in the amount of from about 5% to about 15% by weight of the cathode -- to increase the electrical conductivity characteristics thereof.

Moreover, the cathode may contain a small quantity of conductive carbon such as carbon black or other equivalent conductive carbon materials, generally in the range of from about 0.1% to about 10% or as much as 15% by weight of the cathode.

The cathode mix for preparing the cathode will generally comprise manganese dioxide, together with from about 4% to about 8% by weight tnereof of the alkaline electrolyte -- usually 6N to 12 N KOH; and optionally from about 5% to about 15% by weight thereof of graphite; and optionally from about 0.1% to about 10.0% by weight thereof of conductive carbon; and optionally from about 0.1% to about 5.0% by weight thereof of conductive fibres which may be chosen from the group consisting of carbon fibres, graphite fibres, carbon fibres plated with nickel or silver, graphite fibres, plated with nickel or silver, or copper fibres plated with nickel or silver; and optionally from about 1.0% to about 5.0% by weight of the cathode of a metal-based additive which may be chosen from the group consisting of zinc, zinc oxide, and zinc stearate.

The cathode used in a cell according to the present invention can be prepared by :
(a) mixing the manganese dioxide and any of the optional admix components to form a uniform dry mix;
(b) adding the amount of alkaline electrolyte to be used in the cathode composition to the uniform dry mix, and continuing to blend the mix;
(c) screening the mix to remove agglomerates therefrom, and continuing to blend and screen until uniform moist blended mix is achieved;
(d) compacting the blended mix;
(e) granulating the compacted blended mix;
(f) screening the granulated blended mix;
(g) forming cathode pellets from the screened blended mix; and
(h) placing the pellets in the appropriate cell containers for use as cathodes in the cells to he manufactured.

Typically, step g of forming the cathode pellets or annular sleeves is carried out at pressures ranging from about 1,000 Newtons per square centimeter (N/cm²) to about 20,000 (N/cm²).

The method of the present invention may optionally be followed by a further step of recompacting the cathode pellet(s), after it (they) has (have) been placed in the cell container. The recompaction is generally carried out at the same pressure or within the same pressure range noted above. One or several pellets may be used in a cathode for a bobbin cell; Figure 1 suggests that three pellets may be used in the cell that is illustrated.

What now follows are a number of examples of various cells manufactured in keeping with the present invention, whereby various formulations of unconstrained cathodes have been provided and tested, with the results being given in each instance.

### Example 1

In this case, the anode composition was as follows:

| | | |
|---|---|---|
| Zinc | 60.0% | [6% Hg amalgamated] |
| ZnO | 5.0% | |
| Gelling Agent | 1.0% | |
| Anolyte | 33.5% | [9N KOH with 5% ZnO dissolved in it] |

The cathode had no fibre or other additives but was constructed in a manner so as to substantially fill all of the space allotted to it within the container, with substantially no void space above the cathode beneath the cell closure.

The cathode formulation was as follows:

| | | |
|---|---|---|
| MnO₂ | 81.5% | |
| Graphite | 12.00% | |
| Electrolyte | 6.50% | [9N KOH] |

Here, the cells were cycled at 420 mAh per day into 24 ohms, and were calculated to have a 45% depth of discharge of the cathode, and a 50% depth of discharge of the anode. The cells were cycled for 400 cycles, and there was an apparent imminent cathode failure when the tests were terminated.

### Example 2

This series of tests was carried out to determine the relative amounts of in-cell gassing of cells made according to the present invention compared with cells having copper cages, either uncoated or coated with graphite. In this series of tests, the cathode formulation was identical to that of Example 4, noted above, and the anode composition was as follows:

| | | |
|---|---|---|
| Zinc | 65.5% | [6% Hg amalgamated] |
| Gelling Agent | 1.0% | |
| Anolyte | 33.5% | [9N KOH] |

Two sets of control cells were made, one having copper cages, the other having the same copper cages coated with graphite. The test cells were in keeping with the present invention, and had unconstrained cathodes -- i.e., no cages.

The cells were subjected to 75 deep discharge cycles (or as noted), being discharged in each instance to 0.9V into 3.9 Ohms. The cage cells exhibited identical electrical performance, and the gassing performance of all cells was observed.

The following were the performances noted of the caged and the test cells with unconstrained cathodes in keeping with this invention:

| | Control (Cage) Cells | Test |
|---|---|---|
| Cells | | |
| Initial capacity [Ah] | 6.0 | 6.0 |
| Cycle 10 [Ah] | 3.3 | 3.3 |
| Cycle 20 [Ah] | 3.0 | 3.0 |
| Cycle 30 [Ah] | 1.0* | 2.7 |
| Failure Mode | Short | N/A |

| | | |
|---|---|---|
| *Two of three cells shorted at this time. | | |

The in-cell gassing was observed, and was noted to be the lowest in the test cells in keeping with this invention; with the cage cells having coated cages being higher, and the cage cells having uncoated cages showing the highest gassing activity.

## Claims

1. A rechargeable electrochemical cell having a container, internal components comprising an anode, an ion permeable separator, at least one unconstrained manganese dioxide cathode pellet which has no additional wire screen or cage or binder specifically to constrain the cathode mechanically from growing due to the tendency of manganese dioxide cathodes to swell during a discharge cycle, an ion conductive electrolyte, and a closure member, the said closure member being placed over the anode, separator, cathode and electrolyte, within the container, so as to seal the internal components within the container, and the cathode pellet or pellets being restricted from significantly changing its dimensions during charging and discharging cycles by interference at its or their outer periphery and its or their bottom with the container, and otherwise by interference with the separator and/or with the closure member, and having been formed at a pressure of from about 1,000 to about 20,000 N/cm².

2. A rechargeable electrochemical cell as claimed in Claim 1 in which the anode is zinc, hydrogen, iron, cadmium or lead.

3. A rechargeable electrochemical cell as claimed in Claim 2 in which the anode is zinc and the electrolyte is potassium hydroxide, so that the cell is a rechargeable alkaline cell.

4. A rechargeable electrochemical cell as claimed in any preceding claim in which the cathode pellet further contains a small amount of the potassium hydroxide electrolyte in the amount of from about 4% to about 8% by weight thereof, and further contains a small amount of graphite and optionally a small amount of conductive carbon so as to increase the electrical conductivity characteristics thereof.

5. A rechargeable electrochemical cell as claimed in any of the preceding claims in which after the cathode pellet or pellets have been placed in the container, it or they have been recompacted at a pressure of from about 1,000 to 20,000 N/cm².

6. A rechargeable electrochemical cell as claimed in any preceding claim in which the cell is a cylindrical bobbin-type cell, the anode and cathode pellet are each cylindrical, and the anode is axially placed within the cathode, the cathode pellet or pellets being restricted from significantly changing its or their dimensions during charging and discharging cycles by interference at its or their outer periphery and at its bottom with the container, at its or their inner periphery by interference with the separator, and at its top by interference with the closure member.

7. A rechargeable electrochemical cell as claimed in any of claims 1 to 5 in which the cell is a button cell and the anode and cathode pellet or pellets are each in the form of a disk, the cathode pellet or pellets are placed in the bottom of the container, and said anode is above the cathode pellet or pellets with the separator therebetween, the cathode pellet or pellets being restricted from significantly changing its or their dimensions during charging and discharging cycles by interference at its or their outer periphery and at its or their bottom with the container, and at its or their top by interference with the separator.

8. A rechargeable electrochemical cell as claimed in any of the preceding claims in which the alkaline electrolyte is potassium hydroxide having a normality of from about 6 to about 12.

## Patentansprüche

1. Wiederaufladbare elektrochemische Zelle, die ein Gehäuse sowie innere Komponenten aufweist, umfassend eine Anode, eine ionendurchlässige Trennwand, wenigstens ein nicht gezwungenes Mangandioxidkathodenpellet, das weder eine zusätzliche Drahtmaske noch -behältnis noch -verbindung speziell dazu hat, die Kathode mechanisch vor dem Wachsen infolge der Neigung von Mangandioxidkathoden zum Anschwellen während eines Entladungszyklus zu hindern, einen ionenleitenden Elektrolyten und ein Schließbauteil, wobei das Schließbauteil über der Anode, der Trennwand, der Kathode und dem Elektrolyten innerhalb des Gehäuses so angeordnet ist, daß es die inneren Komponenten in dem Gehäuse verschließt, und wobei das/die Kathodenpellet(s) daran gehindert wird/werden, seine/ihre Abmessungen spürbar zu verändern während der Ladeund Entladezyklen durch Kontakt seines/ihrer äußeren Randbereiche(s) und seiner/ihrer Bodenfläche(n) mit dem Gehäuse und andererseits durch Kontakt mit der Trennwand und/oder dem Schließbauteil und wobei diese(s) bei einem Druck von etwa 1.000 bis etwa 20.000 N/cm² gebildet wurde(n).

2. Wiederaufladbare elektrochemische Zelle nach Anspruch 1, wobei deren Anode aus Zink, Wasserstoff, Eisen, Kadmium oder Blei besteht.

3. Wiederaufladbare elektrochemische Zelle nach Anspruch 2, wobei deren Anode aus Zink besteht und der Elektrolyt Kaliumhydroxid ist, so daß die Zelle eine wiederaufladbare alkalische Zelle ist.

4. Wiederaufladbare elektrochemische Zelle nach einem der vorstehenden Ansprüche, wobei das Kathodenpellet weiterhin eine kleine Menge des Kaliumhydroxidelektrolyten in einer Menge von etwa 4 Gew.-% bis etwa 8 Gew.-% der Kathode und weiterhin eine kleine Menge Graphit und wahlweise eine kleine Menge an leitendem Kohlenstoff enthält, um seine elektrischen Leitfähigkeitsmerkmale zu verbessem.

5. Wiederaufladbare elektrochemische Zelle nach einem der vorstehenden Ansprüche, wobei das/die Kathodenpellet(s) bei einem Druck von etwa 1.000 bis 20.000 N/cm² wiederverdichtet wurden, nachdem es/sie in dem Gehäuse angeordnet wurden.

6. Wiederaufladbare elektrochemische Zelle nach einem der vorstehenden Ansprüche, wobei die Zelle vom Typ einer zylindrischen Spulenzelle ist, die Anode und das Kathodenpellet jeweils zylindrisch sind und die Anode axial innerhalb der Kathode angeordnet ist, wobei das/die Kathodenpellet(s) daran gehindert wird/werden, seine/ihre Abmessungen spürbar zu verändem während der Lade- und Entladezyklen durch Kontakt seines/ihrer äußeren Randbereiche(s) und seiner/ihrer Bodenfläche(n) mit dem Gehäuse und seines/ihrer inneren Randbereiche(s) durch Kontakt mit der Trennwand und seiner/ihrer Oberseite(n) mit dem Schließbauteil.

7. Wiederaufladbare elektrochemische Zelle nach einem der Ansprüche 1 bis 5, wobei die Zelle eine Knopfzelle ist und wobei die Anode und das/die Kathodenpellet(s) jeweils in der Form einer Scheibe sind, wobei das/die Kathodenpellet(s) auf der Bodenfläche des Gehäuses und die Anode über dem/den Kathodenpellet(s) mit der dazwischenliegenden Trennwand angeordnet sind, wobei das/die Kathodenpellet(s) daran gehindert wird/werden, seine/ihre Abmessungen spürbar zu verändem während der Lade- und Entladezyklen durch Kontakt seines/ihrer äußeren Randbereiche(s) und seiner/ihrer Bodenfläche(n) mit dem Gehäuse und seiner/ihrer Oberseite(n) durch Kontakt mit der Trennwand.

8. Wiederaufladbare elektrochemische Zelle nach einem der vorstehenden Ansprüche, wobei der alkalische Elektrolyt Kaliumhydroxid eine Normalität von etwa 6 bis etwa 12 aufweist.

## Revendications

1. Pile électrochimique rechargeable ayant un récipient, des composants internes comprenant une anode, un séparateur perméable aux ions, au moins une pastille de cathode en dioxyde de manganèse, non contrainte, qui ne présente aucun tamis en fil métallique supplémentaire, ni cage, ni liant, pour empêcher spécifiquement, mécaniquement la cathode de croître en raison de la tendance des cathodes en dioxyde de manganèse à gonfler durant un cycle de décharge, un électrolyte conducteur d'ions, et un organe de fermeture, ledit organe de fermeture étant placé sur l'anode, le séparateur, la cathode et l'électrolyte, dans le récipient, de manière à isoler hermétiquement les composants internes dans le récipient et la ou les pastilles de cathode étant empêchées de changer significativement de dimension durant des cycles de charge et de décharge, par une interférence au niveau de sa ou de leur périphérie extérieure et de son ou de leur fond avec le récipient, et autrement par une interférence avec le séparateur et/ou avec l'organe de fermeture, et ayant été formés à une pression comprise dans la plage allant d'à peu près 1000 à à peu près 20000 N/cm².

2. Pile électrochimique rechargeable selon la revendication 1, dans laquelle l'anode est du zinc, de l'hydrogène, du fer, du cadmium ou du plomb.

3. Pile électrochimique rechargeable selon la revendication 2, dans laquelle l'anode est du zinc et l'électrolyte est de l'hydroxyde de potassium, de manière que la pile soit une pile alcaline rechargeable.

4. Pile électrochimique rechargeable selon l'une quelconque des revendications précédentes, dans laquelle la pastille de cathode contient en outre une faible quantité d'électrolyte à base d'hydroxyde de potassium, en une quantité comprise dans la plage allant d'à peu près 4 % à à peu près 8 % en poids de ce dernier, et contient en outre une faible quantité de graphite et, en option, une faible quantité de carbone conducteur, de manière à augmenter ses caractéristiques de conductivité électrique.

5. Pile électrochimique rechargeable selon l'une quelconque des revendications précédentes, dans laquelle, après que la ou les pastilles de cathode aient été placées dans le récipient, elle ou elles ont été recompactées à une pression d'à peu près 1000 à 20000 N/cm².

6. Pile électrochimique rechargeable selon l'une quelconque des revendications précédentes, dans laquelle la pile est une pile de type à bobine cylindrique, la pastille d'anode et de cathode sont chacune de forme cylindrique, et l'anode est placée axialement dans la cathode, là où les pastilles de cathode sont empêchées de changer significativement de dimension durant des cycles de charge ou de décharge, par une interférence au niveau de sa ou de leur périphérie extérieure et de son ou de leur fond avec le récipient, ou niveau de sa ou de leur périphérie intérieure par une interférence avec le séparateur, et au niveau de leur sommet par une interférence avec l'organe de fermeture.

7. Pile électrochimique rechargeable selon l'une quelconque des revendications 1 à 5, dans laquelle la pile est une pile bouton et la ou les pastilles d'anode et de cathode se présentent chacune sous la forme d'un disque, la ou les pastilles de cathode sont placées au fond du récipient, et ladite anode se situe au-dessus de la ou des pastilles de cathode, avec le séparateur entre elles, la ou les pastilles de cathode étant empêchées de changer significativement de dimension durant des cycles de charge et de décharge, par une interférence au niveau de sa ou de leur périphérie extérieure et de son ou de leur fond avec le récipient, et de son ou de leur sommet par une interférence avec le séparateur.

8. Pile électrochimique rechargeable selon l'une quelconque des revendications précédentes, dans laquelle l'électrolyte alcalin est de l'hydroxyde de potassium ayant une normalité d'à peu près 6 à à peu près 12.
